# EUROPEAN PATENT APPLICATION

(11) **EP 4 679 335 A1**
(43) Date of publication of application: **14.01.2026**
(21) Application number: 24187111.0
(22) Date of filing: 08.07.2024
(51) Int. Cl.: G06N 10/40, G21K 1/00, B82B 1/00, B82B 3/00, B82Y 10/00, G04F 5/14, G02F 1/025, G02F 1/225, G02F 1/01, G02F 1/11, G02F 1/33

(54) **A DEVICE FOR TRAPPING ATOMS**

(71) Applicant: Infineon Technologies Austria AG, 9500 Villach (AT)
(72) Inventor: BRANDL, Matthias, 85614 Kirchseeon (DE)
(74) Representative: Infineon Patent Department

(57) **Abstract**

An atom trapping device having waveguides for guiding light for application to a plurality of atom trapping locations. Modulation arrangements are configured to perform optical modulation of light carried by the waveguides responsive to any control signals provided thereto. A multiplexer arrangement is configured to control which, if any, control signal(s), generated by one or more control signal generators, are provided to each modulation arrangement.

## Description

### TECHNICAL FIELD

The present disclosure relates to the field of quantum computing, and in particular, to devices for trapping atoms.

### BACKGROUND

There is growing interest and rapid development in the field of quantum computing. One particular type of quantum computing environment is a trapped atom environment, in which computing is performed using atoms as qubits for computation. The excitation state of an electron of an atom may indicate a logical value or logic state. Atoms such as barium (Ba), magnesium (Mg), calcium (Ca), beryllium (Be), potassium (K), strontium (K) or the like, may used, with a single electron in the outer shell of the ion used as the logic element. Two or more atoms may be entangled, as changing the state of one qubit causes the entangled qubits to change their state immediately, having the potential to provide substantial speed and power savings over conventional computing.

Quantum computing requires a well-controlled environment, and precise handling of the atoms. One example of a device for trapping atoms is a trapped ion device designed to trap ions. A trapped ion device, also referred to as a trapped ion quantum computing (TIQC) system, traps or controls ions using electromagnetic fields. Other forms of devices for trapping atoms are known in the art, such as those that employ an optical lattice trapping technique, optical tweezer trapping technique, a magnetic trapping technique or a magneto-optical trapping technique.

Some forms of devices for trapping ions are designed or configured to allow the application of light, e.g., laser light, to one or more locations at which atoms are trapped. The application of light to an atom trap location may, for instance, be used to change or read a state of the atom, to perform cooling of the atom, perform one or more gating operations, and/or to aid in the trapping of an atom at the atom trap location.

### SUMMARY

There is provided a device for trapping one or more atoms comprising: an atom trapping arrangement configured to selectively trap a respective atom in each of a plurality of different atom trap locations; for each atom trap location in the plurality of different atom trap locations, at least one waveguide configured to guide light for application to said atom trap location; for each waveguide, a modulation arrangement configured to controllably perform optical modulation on light guided by said waveguide; one or more control signal generators configured to generate one or more control signals; and a multiplexer arrangement configured to control which, if any, of the one or more control signals are provided to each modulation arrangement, wherein each modulation arrangement performs the optical modulation of light responsive to any control signal that is provided to said modulation arrangement by the multiplexer arrangement.

There is also provided a modulation arrangement comprises a plurality of different, separate modulation elements, each modulation element being configured to perform the optical modulation of light responsive to a respective element control signal that is provided to said modulation element.

Those skilled in the art will recognize additional features and advantages upon reading the following detailed description, and upon viewing the accompanying drawings.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.
Fig. 1 illustrates a device for trapping ions;
Fig. 2 illustrates a modulation arrangement;
Fig. 3 illustrates a proposed modulation arrangement;
Fig. 4 illustrates another proposed modulation arrangement;
Fig. 5 illustrates control logic for modulation arrangements;
Fig. 6 illustrates another modulation arrangement;
Fig. 7 illustrates a biasing circuit for use in a modulation arrangement;
Fig. 8 illustrates another modulation arrangement; and
Fig. 9 illustrates yet another modulation arrangement.

### DETAILED DESCRIPTION

The examples described herein provide an atom trapping device having waveguides for guiding light for application to a plurality of atom trapping locations. Modulation arrangements are configured to perform optical modulation of light carried by the waveguides responsive to any control signals provided thereto. A multiplexer arrangement is configured to control which, if any, control signal(s), generated by one or more control signal generators, are provided to each modulation arrangement.

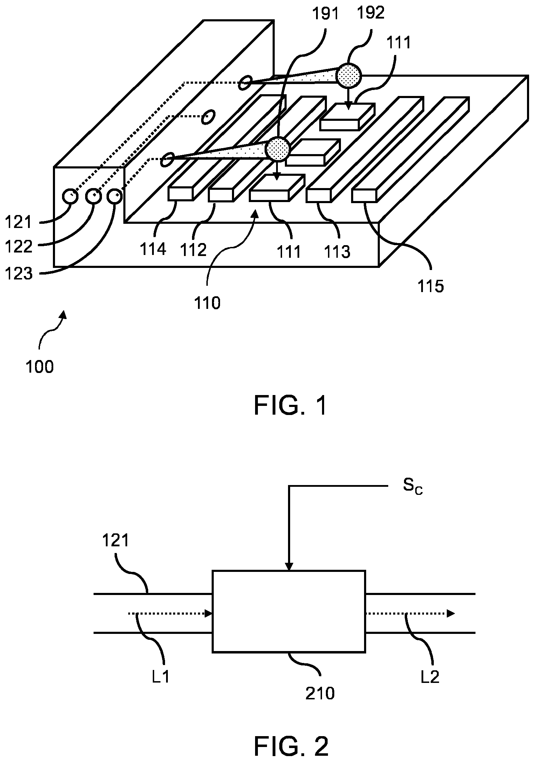

Fig. 1 illustrates a portion of a device 100 for trapping one or more atoms, also known as an atom trap device.

The device 100 comprises an atom trapping arrangement 110 configured to selectively trap a respective atom 191, 192 in each of a plurality of different atom trap locations or zones. Each atom may, for instance, be a charged particle such as an ion. The structure and configuration of suitable atom trapping arrangements are well known in the art.

One suitable example of an atom trapping arrangement 110 that employs electric and/or magnetic fields to trap a charged atom (e.g., an ion) is illustrated. Here, the illustrated atom trapping arrangement 110 comprises a central DC electrode 111 for each atom trap location. Each atom trap location may lie in the vicinity (e.g., above) the corresponding central DC electrode. Each central DC electrode 111 may be arranged between two RF electrodes 112, 113, wherein (in use) a voltage applied to the RF electrodes is controlled to maintain the position of the atom within the atom trap location. The atom trapping arrangement 110 may further comprise ground electrodes 114, 115 at either side of the array of the central DC electrode(s) 111 and the RF electrodes 112, 113. In use, the voltage of the DC electrodes 111 and/or the RF electrodes 112, 113 may be manipulated to control a movement of the trapped atom, e.g., between different atom trap locations or zones.

The DC electrodes may be connected or connectable to one or more DC voltage sources (not visible in Fig. 1). Similarly, the RF electrodes may be connected or connectable to one or more RF voltage sources. The ground electrodes may be connected to a ground potential or earth. The electric wiring for the electrodes is not illustrated in Fig. 1

The illustrated atom trapping arrangement makes use of electrodes to trap atoms. However, other forms of atom trapping arrangements are known in the art, such as those that employ an optical lattice trapping technique, optical tweezer trapping technique, a magnetic trap technique, a magneto-optical trap technique and so on.

The device 100 further comprises, for each atom trap location, at least one waveguide 121, 122, 123 configured to guide light for application to said atom trap location.

Light, such as laser light, guided by a waveguide may be applied to an appropriate atom trap location (e.g., to any atom(s) held at the atom trap location). Amongst other examples, the application of light to an atom trap location may, for instance, be used to change or read a state of the atom, to perform cooling of the atom, perform one or more gating operations, and/or to aid in the trapping of an atom at the atom trap location. A wide variety of reasons, techniques and elements for performing the application of light to an atom trapping location are known in the art.

For instance, a waveguide may terminate at a light exit window. The light exit window may be configured to have an optical function (e.g., a light focusing function and/or a light redirecting function and/or a polarization control function and/or an attenuation function, all of which may, for example, be frequency dependent) for the light output by the waveguide. In one example, the light exit window may comprise a curved surface forming a lens. In other examples, the light exit window may be provided with an optical transition element such as a grating.

In the illustrated example, a single waveguide is illustrated for each atom trap location or zone. However, any number of waveguides may be provided for each atom trap location or zone, e.g., equal to or more than three, four, five, six ... to ten waveguides per atom trap location.

Of course, in some examples, the atom trapping arrangement of the device may be configured to define one or more atom trap locations to which no waveguide is able to guide light for application thereto.

Although not illustrated, it will be appreciated that at least some of the waveguides may be configured or designed to interact with one another, e.g., to provide a beam splitting functionality. The design and structure of such arrangements are well known in the art.

It will be appreciated that Fig. 1 is only schematic, and only illustrates a subset of the possible elements of the device. Accordingly, in practice, the device 100 may comprise additional atom trapping arrangements, additional atom trap locations and/or additional waveguides.

There is a desire to facilitate control over the light carried by the/each waveguide. In other words, there is a desire to facilitate active photonics that allow for control over light in the waveguide, e.g., to control whether or not light is output by the waveguide and/or to control or modify one or more characteristics of any light carried/guided by the waveguide (e.g., an intensity, phase or polarization of light).

Accordingly, there is a desire to integrate modulation arrangements into the device, where the modulation arrangements are configured to controllably perform optical modulation on light guided by the waveguide. The performance of optical modulation facilitates control over the amount and/or characteristic(s) of light guided by the waveguide, e.g., the intensity, phase or polarization of the carried light.

In particular, the device may comprise, for each waveguide that guides light for application to the atom trap location, a modulation arrangement.

Fig. 2 illustrates a portion of a device for improved contextual understanding. In particular, Fig. 2 illustrates a portion of a waveguide 121 and a modulation arrangement 210, taking the form of a single optical modulator.

The modulation arrangement 210 is configured and positioned to controllably perform optical modulation on light L1, L2 guided by the waveguide 121. In particular, the modulation arrangement is configured to receive first light L1 guided by the waveguide and perform optical modulation on the first light to produce second light L2 for further guiding by the waveguide 121.

As previously explained, the optical modulation performed by the modulation arrangement 210 may modify one or more characteristics of the (first) light, such as the intensity, phase or polarization of the light. Controlling an intensity may control or define whether or not second light is output by the modulation arrangement.

The modulation arrangement is configured to perform the optical modulation of light responsive to a control signal Sc. Thus, a control signal received by the modulation arrangement controls the amount of optical modulation performed by the modulation arrangement. Changes in the control signal received by the modulation arrangement thereby change the optical modulation performed by the modulation arrangement.

A wide variety of suitable modulation arrangements for modulating light carried by a waveguide are known in the art, and include thermal optical modulators (also known as thermo-optical modulators), electo-optical modulators, piezo-electrical optical modulators and acousto-optic modulators.

A common characteristic of known modulation arrangements is that the optical modulation is responsive to a voltage or power of a control signal Sc provided or connected to the modulation arrangement.

One example of a thermal optical modulator is put forward by Tinker, M. T., and J. B. Lee. "Thermal and optical simulation of a photonic crystal light modulator based on the thermo-optic shift of the cut-off frequency." Optics express 13.18 (2005): 7174-7188. Examples of electro-optical modulators include those described by Xu, Qianfan, et al. "Micrometre-scale silicon electro-optic modulator." nature 435.7040 (2005): 325-327 or Sun, D., Zhang, Y., Wang, D. et al. Microstructure and domain engineering of lithium niobate crystal films for integrated photonic applications. Light Sci Appl 9, 197 (2020). One example of a piezo-electric optical modulator is proposed by Hogle, Craig W., et al. "High-fidelity trapped-ion qubit operations with scalable photonic modulators." npj Quantum Information 9.1 (2023): 74. Examples of acousto-optic modulator include that proposed by Sarabalis, Christopher J., et al. "Acousto-optic modulation of a wavelength-scale waveguide." Optica 8.4 (2021): 477-483.

The present disclosure recognizes that there will be an ongoing difficulty with scalability of integrating waveguides into an atom trapping device. In particular, there will be significant problems with the scalability of control circuitry (particularly the electric control circuitry) of modulation arrangements used to perform optical modulation on light carried by respective waveguides.

It is herein proposed to provide one or more control signal generators configured to generate one or more control signals for the modulation arrangement(s). The present disclosure also proposes the use of a multiplexer arrangement configured to control which, if any, of the one or more control signals are provided to each modulation arrangement.

In this way, a multiplexer arrangement is used to control the application of control signals to modulation arrangements. This avoids a requirement that each modulation arrangement requires a dedicated control signal generator and/or allows for faster switching of a control signal provided to a modulation arrangement. More particularly, the use of a multiplexer arrangement facilitates a reduction in the number of channels (i.e., wires or conductive elements) needed to provide a control signal to each modulation arrangement.

Proposed and described embodiments also provide advantageous, but not essential, configurations for each modulation arrangement to facilitate the use of a reduced number of control signal generators for appropriate control of the modulation arrangement(s).

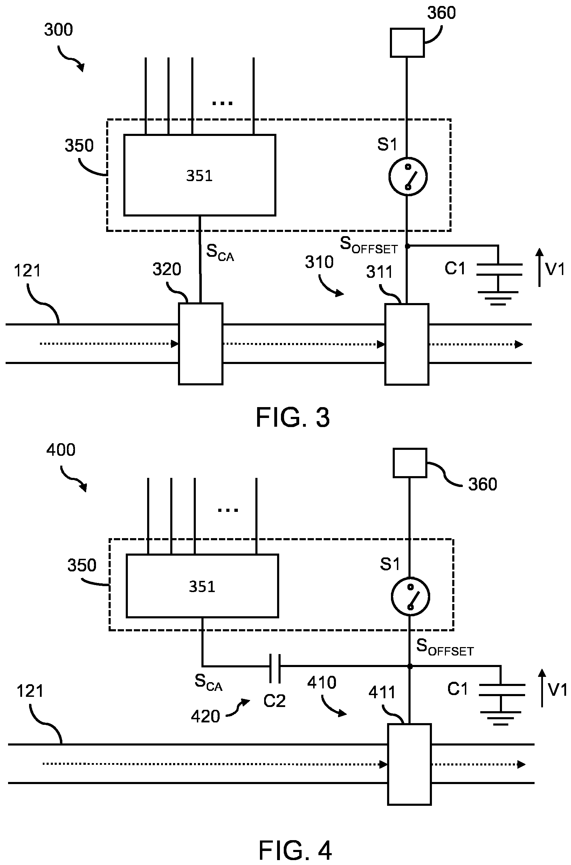

Fig. 3 illustrates a proposed modulation arrangement 300 and a portion of a corresponding multiplexer arrangement 350 for use with the proposed modulation arrangement 300. The modulation arrangement may be used as the modulation arrangement for any waveguide 121 of a herein proposed device.

The modulation arrangement comprises an offset modulation arrangement 310 and an amplitude modulation arrangement 320.

The offset modulation arrangement 310 is (controllably) provided with an offset control signal S_{OFFSET} by the multiplexer arrangement 350. The amplitude modulation arrangement 320 is (controllably) provided with an amplitude control signal S_{CA} by the multiplexer arrangement 350.

The offset modulation arrangement 310 is configured to controllably apply an offset modulation to the light guided by the waveguide 121. Here, the offset modulation arrangement comprises a first optical modulator 311 for applying the offset modulation. The offset modulation effectively performs a constant/static or near-constant/static modulation or modification to the characteristic of the light guided by the waveguide. In this context, a constant modulation is a relatively low-speed modulation, e.g., performed at a frequency less than 1000 S/s. In some preferred examples, the offset modulation arrangement is configured to apply the same offset modulation during a gate operation of the light guided by the waveguide.

In the illustrated example, the first optical modulator is configured to perform optical modulation responsive to a first voltage V1 supplied to the first optical modulator. The first voltage V1 may, for instance, be (at least initially) defined or supplied by a control signal generator connected to the offset modulation arrangement 310 by a switch S1 of the multiplexer arrangement.

The offset modulation arrangement 310 may further comprise a first capacitor C1 connected to the first optical modulator, wherein the first capacitor is configured to store the first voltage V1 and supply the first voltage to the first optical modulator. In this way, once the first voltage is provided to the first capacitor, the multiplexer arrangement may disconnect the offset modulation arrangement from any control signal generator. This technique can be used to free up the control signal generator(s) to, for instance, provide a different first voltage to an offset modulation arrangement of a different modulation arrangement.

Although illustrated as a separate capacitor, in some embodiments the first optical modulator 311 is able to function or operate as the first capacitor C1. In particular, the first optical modulator may itself have or define a sufficiently large capacitance to store the first voltage V1 there across. Thus, in some approaches, a dedicated first capacitor C1 can be omitted (with the first optical modulator instead functioning as the first capacitor). However, in other approaches, the first capacitor C1 and the first optical modulator 311 are two distinct and separate elements.

In this way, the multiplexer arrangement may comprise a switch S1 for each modulation arrangement (of a plurality of modulation arrangements) connected to a same control signal generator 360. The control signal generator 360 and the switches S1 can be controlled to provide a respective first voltage to each modulation arrangement (e.g., in turn or when needed). In this way, the (single) output of a single control signal generator 360 is able to at least partially control or define the modulation performed by a plurality of different modulation arrangements.

Thus, the one or more control signal generators and the multiplexer arrangement may be together configured to controllably update the first voltage stored by the first capacitor. In particular, if there is a desire to update the value of the first voltage V1, then a control signal generator may generate an offset control signal S_{OFFSET} carrying the updated value, which control signal is then connected to the offset modulation arrangement by (the switch S1 of) the multiplexer arrangement 350. The multiplexer arrangement may then disconnect the offset modulation arrangement from the offset control signal S_{OFFSET} to free the control signal and/or wire/line carrying the control signal for use with other modulation arrangements.

The amplitude modulation arrangement 320 is configured to controllably apply a varying modulation to the light guided by the waveguide. Here, the amplitude modulation arrangement 320 is a second optical modulator for applying the amplitude modulation. The second optical modulator is separate to the first optical modulator 311, i.e., performs a separate modulation of the light carried by the waveguide 121.

In this context, a varying modulation is a relatively high-speed modulation, e.g., performed at a frequency greater than 10 MS/s, e.g., greater than 20 MS/s.

The second optical modulator is configured to perform optical modulation responsive to the amplitude control signal S_{CA} provided to the second optical modulator.

The illustrated multiplexer arrangement 350 comprises a many-to-one multiplexer arrangement 351, in which a plurality of candidate control signals are selectively connectable to the amplitude modulation arrangement, to thereby define which candidate control signal defines or provides the amplitude control signal S_{CA}. Each candidate control signal is thereby a varying signal that controls the varying modulation performed by the amplitude modulation arrangement. Each candidate control signal is generated by a respective control signal generator, such that the multiplexer arrangement defines which candidate control signal is suppled to the amplitude modulation arrangement 320.

However, the use of the many-to-one multiplexer arrangement 352 is not essential. Rather, the amplitude modulation arrangement may be directly connected to a single control signal generator (which may provide the same amplitude control signal to a plurality of different modulation arrangements). This approach can be used, for instance, where it is known that a plurality of different modulation arrangements are designed to perform a same pattern or style of modulation on light carried by respective waveguides.

The use of separate offset and amplitude modulation arrangements allows for the avoidance of a dedicated control signal generator for each modulation arrangement. In particular, a same control signal may be provided to different amplitude modulation arrangements (using the multiplexer arrangement), whilst each modulation is offset with its own, controllable offset modulation by the offset modulation arrangement.

By way of further explanation, it has been recognized that there may be a desire to perform a same pattern of modulation of light carried by different waveguides. However, due to fabrication variations or the like, there is likely to be an offset error between different modulation arrangements.

Historically, the only identified approach to overcoming these offset errors is to provide a different control signal to each modulation arrangement.

The proposed approach uses a technique of splitting a modulation arrangement into (at least) an offset modulation arrangement and an amplitude modulation arrangement, where the offset modulation arrangement can be controlled to account for the offset error and the amplitude modulation arrangement can be controlled to perform a particular pattern of modulation for the light. This proposed approach allows for a significant reduction in the number of control signal generators, as a single control signal generator can be used to define the first voltage V1 (i.e., the offset voltage) of a plurality of different modulation arrangements and a same amplitude control signal can be provided to each of a plurality of different modulation arrangements.

It will be appreciated that, although not explicitly illustrated in Fig. 3, the multiplexer arrangement will comprise control circuitry and/or logic for performing control tasks.

Fig. 4 illustrates a variant modulation arrangement 400 and a portion of a corresponding multiplexer arrangement 350 for use with the modulation arrangement 400. The function of the multiplexer arrangement 350 may be similar or identical to that of the previously described embodiment.

The modulation arrangement 400 differs from the previously described modulation arrangement in that, rather than a first and second modulator, the modulation arrangement 400 comprises a third optical modulator 411.

The modulation arrangement 400 again comprises an offset modulation arrangement 410 and an amplitude modulation arrangement 420, which are both configured to control the modulation of the third optical modulator 411.

The offset modulation arrangement 410 comprises a first capacitor C1 connected to the third optical modulator, namely between the third optical modulator and a ground or reference voltage. The first capacitor C1 is configured to store the first voltage V1 and supply the first voltage to the third optical modulator 411. The control of the first voltage V1 is as previously described.

Although illustrated as a separate capacitor, in some embodiments the third optical modulator 311 is able to function or operate as the first capacitor C1. In particular, the third optical modulator may itself have or define a sufficiently large capacitance to store the first voltage V1 there across. Thus, in some approaches, a dedicated first capacitor C1 can be omitted (with the third optical modulator instead functioning as the first capacitor). However, in other approaches, the first capacitor C1 and the third optical modulator 311 are two distinct and separate elements.

The amplitude modulation arrangement 420 comprises a second capacitor C2 connected to the third optical modulator. More particularly, the second capacitor C2 connects between the third optical modulator 411 and the multiplexer arrangement 350.

The multiplexer arrangement 350 is configured to control the provision of the amplitude control signal S_{CA} to the second capacitor C2 from the multiplexer arrangement. The amplitude control signal S_{CA} is a varying signal configured for controlling the third optical modulator to perform a varying modulation. The second capacitor C2 acts to pass the (varying) amplitude control signal S_{CA} to effectively superimpose the amplitude control signal S_{CA} on the first voltage V1. The second capacitor C2 also acts to block the first voltage V1 from passing to the multiplexer arrangement, specifically the many-to-one multiplexer arrangement 351.

In this way, the offset modulation arrangement provides a first voltage V1 to a first plate of the second capacitor, and the amplitude modulation arrangement defines the amplitude control signal S_{CA} provided to a second plate, opposite to the first plate.

The modulation arrangement may be used as the modulation arrangement for any waveguide 121 of a herein proposed device.

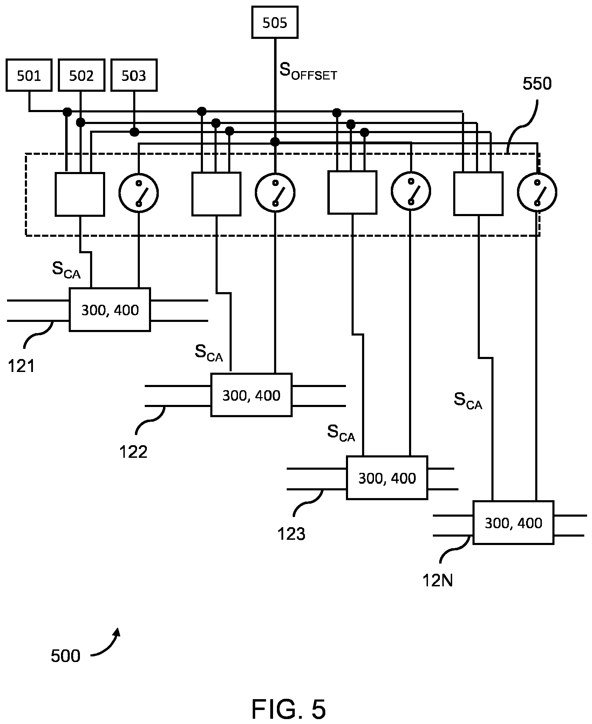

Fig. 5 illustrates a portion of a device 500 that makes use of the proposed modulation arrangement. In particular, Fig. 5 illustrates a plurality of waveguides 121, 122, 123, 12N and a respective modulation arrangement 300, 300 for each waveguide. The device further comprises a multiplexer arrangement 550 and control signal generators 501, 502, 503, 505.

The multiplexer arrangement 550 controls the connection between the control signal generators and the modulation arrangements 300, 400.

In particular, a first set of control signal generators 501, 502, 503 is configured to generate a plurality of candidate amplitude control signals. The multiplexer arrangement 550 is configured to selectively provide, to the amplitude modulation arrangement of each modulation arrangement, one of the candidate amplitude control signals as the amplitude control signal. In this way, a same control signal can be supplied to each of a plurality of different modulation arrangements.

A second set of control signal generators 505 (here a single control signal generator) is configured to generate an offset control signal S_{OFFSET}. The magnitude of the offset control signal changes for different offset modulation arrangements, e.g., to a different first voltage for the offset modulation of different modulation arrangements. The multiplexer arrangement is configured to connect the offset control signal to the corresponding modulation arrangement when the magnitude of the offset control signal matches a (required) first voltage for the corresponding modulation arrangement.

The magnitude of the offset control signal may be controlled using, for instance, a photodetector to detect one or more properties of the light guided by the corresponding waveguide (for which the modulation arrangement modulates the light). The magnitude of the offset control signal may be modified or controlled such that the light detected by the photo detector has a predetermined intensity or other characteristic (e.g., polarity), indicating that a characteristic of the light has been appropriately modulated. This provides a mechanism for feedback-based controlling of the offset control signal, e.g., using a closed-loop feedback system.

The modulation performed by some forms of optical modulators, such as electro-optical modulators, for a same applied control signal may change over time. For instance, charge injection or accumulation in an electro-optical modulator may cause a change in the modulation performed by the electro-optical modulator for a same control signal. This can be identified, for instance using a photodetector or similar, and addressed by updating the offset voltage.

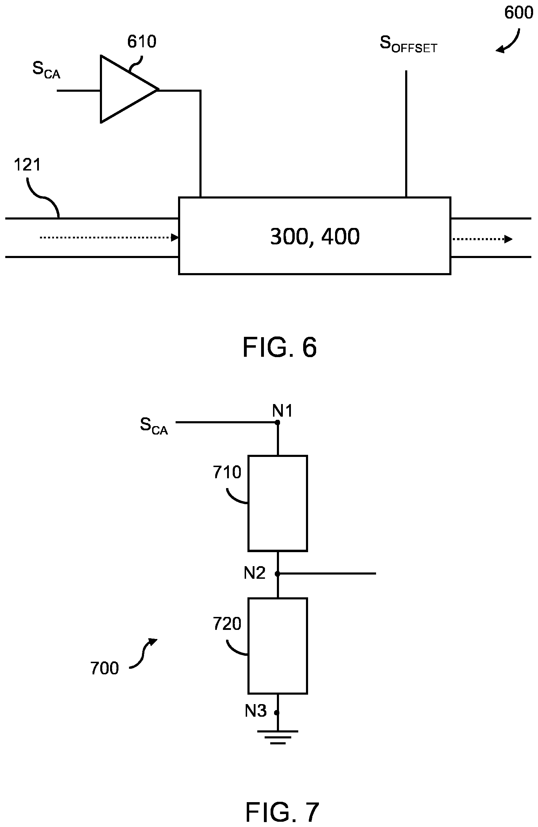

Figure 6 illustrates a further variant to a modulation arrangement 600, which may be as otherwise previously described. The modulation arrangement 600 may comprise the elements of any previously described modulation arrangement 300, 400.

The modulation arrangement 600 here further comprises a biasing circuit 610 configured to bias a magnitude of the amplitude control signal S_{CA} provided to the amplitude modulation arrangement by the multiplexer arrangement.

This approach recognizes that although there may be a desire to perform a same pattern of modulation at each of plurality of different modulation arrangement, the modulation performed by an amplitude modulation arrangement of different modulation arrangements may, in practice, differ (even when provided with a same signal). This may be due to manufacturing or fabrication variations.

The use of a biasing circuit 610 allows for calibration of the amplitude control signal for each amplitude modulation arrangement to take account of these variations. This can therefore reduce error or variation in the optical modulation performed by different modulation arrangements, at least when there is a desire to for the modulation arrangement to perform a same optical modulation.

Accordingly, although not illustrated, the biasing circuit may comprise biasing logic configured to bias the magnitude of the amplitude control signal to calibrate the amplitude control signal.

The biasing circuit 610 may, for instance, comprise a variable amplifier, e.g., a variable operational amplifier, for variable control over the magnitude of the amplitude control signal S_{CA} provided to the amplitude modulation arrangement.

Figure 7 illustrates a suitable alternative example of a biasing circuit 700, which takes the form of a variable voltage divider. In particular, the biasing circuit may comprise a first resistor arrangement 710 and a second resistor arrangement 720.

The first resistor arrangement 710 is connected between an input node N1 (for receiving the amplitude control signal S_{CA}) and an output node N2 (for outputting the biased amplitude control signal). The second resistor arrangement 720 is connected between the output node N2 and a ground or reference node N3.

One or both of the first resistor arrangement and the second resistor arrangement is a variable resistor arrangement, i.e., having a controllable and/or variable resistance. This allows for control over the biasing applied to the amplitude control signal S_{CA}, e.g., by biasing logic (not visible).

In preferred examples, the resistance or impedance of the first resistor arrangement is less than (e.g., more than 10 times smaller than) the resistance or impedance of the second resistor arrangement. This reduces heat dissipation in the device which may negatively impact or affect the operation of components of the device (such as any optical modulator).

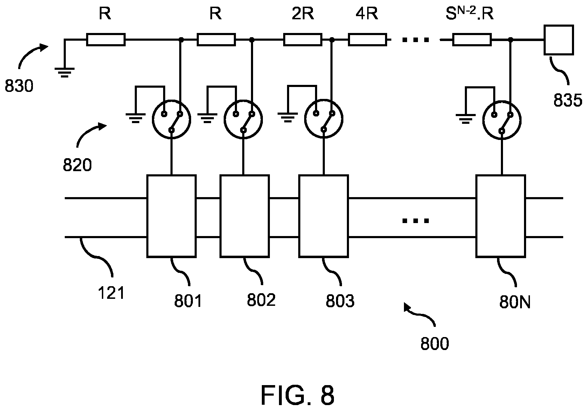

Fig. 8 illustrates another example modulation arrangement 800 that may be employed in a proposed device. The modulation arrangement is effectively a quasi-digital modulation arrangement, in that it performs digital-like optical modulation.

The modulation arrangement 800 comprises a plurality of different, separate modulation elements 801, 802, 803, ..., 80N. Each modulation element is configured to perform optical modulation of light responsive to a respective element control signal that is provided to said modulation element. Thus, each modulation element is effectively its own optical modulator and may, for instance, be a thermal optical modulator, electro-optical modulator, piezo-electrical optical modulator or acousto-optic modulators.

The modulation arrangement 800 here comprises a switching arrangement 820. The switching arrangement is configured to, responsive to a modulation control signal provided via the multiplexer arrangement (not visible in Fig. 8), selectively connect each modulation element to either a ground reference voltage (i.e., put into an inactive state or deactivated) or a respective drive voltage for the modulation element (i.e., put into an active state or activated) to thereby control the optical modulation performed by each modulation element 801, 802, 803, ..., 80N. The circuitry for connection to the multiplexer arrangement is not visible in Fig. 8.

In this way, the switching arrangement 820 effectively controls, for each modulation element, whether or not the modulation arrangement is active/activated/driven. In the illustrated example, the switching arrangement 820 comprises a switch for each modulation element to thereby control whether or not the modulation element is activated.

In particular, in use, the modulation control signal provided to the switching arrangement defines or controls which of the switches of the switching arrangement should be activated. For instance, the switching arrangement may comprise switching logic (not visible) configured to convert a value carried by the modulation control signal into switch control signals that control which of the switches are to be activated.

The modulation arrangement 800 may be configured such that the magnitude of optical modulation performed by each modulation element when activated is different. For instance, the amplitude of modulation performed by the n-th modulation element (when activated/driven) may be equal to n times the amplitude of modulation performed by the first modulation element (when activated/driven). This implies that the first modulation element has the smallest peak magnitude of optical modulation, when activated, amongst all activated modulation elements of the modulation arrangement.

This can be achieved by appropriately biasing a modulation voltage supplied to each modulation element and/or varying a characteristic of the modulation elements, such as a length of the waveguide with which the modulation element interacts. Generally, the greater this length, the greater the peak magnitude of modulation performed by the modulation element for the same control voltage.

Thus, in some approaches each modulation element may interact with a different portion of the waveguide to perform the optical modulation; and the length of each portion of the waveguide, with which the plurality of modulation elements interact, is different.

Fig. 8 illustrates an approach in which the modulation voltage supplied to each modulation element is biased using a voltage biasing arrangement 830, here embodied as a voltage ladder. The voltage biasing arrangement 830 is configured to, for each modulation element, bias a reference voltage to define the respective drive voltage for the modulation element. The reference voltage is defined at a voltage input 835.

More specifically, the voltage biasing arrangement is configured to define a different drive voltage for each modulation element.

By controlling which modulation elements are activated (i.e., driven by their drive voltage), it is possible to control the total amount of optical modulation performed by the modulation arrangement. In particular, the magnitude of modulation performed by the modulation arrangement is effectively equal to the sum of the magnitude of modulation performed by all active/driven modulation elements. Thus, controlling the switch arrangement, which controls which modulation elements are activated, controls the magnitude of optical modulation performed by the modulation arrangement.

In the illustrated example, the voltage biasing arrangement is configured such that the amplitude of modulation performed by the n-th modulation element (when activated/driven) may be equal to n times the amplitude of modulation performed by the first modulation element (when activated/driven). This is achieved by configuring each resistor of a voltage ladder appropriately.

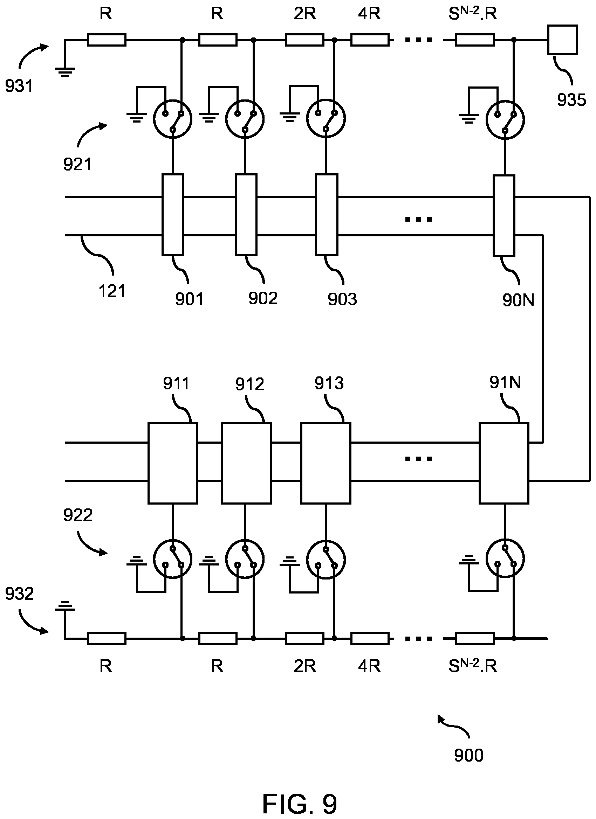

Fig. 9 illustrates an alternative modulation arrangement 900 in which the modulation arrangement 900 is configured such that the magnitude of optical modulation performed by each modulation element when activated is different, which is performed by appropriately biasing a modulation voltage supplied to each modulation element and varying a length of the waveguide with which the modulation element interacts.

In particular, the modulation arrangement 900 is configured to comprise a plurality of sets of modulation elements. Here, the modulation arrangement comprises a first set of modulation elements 901, 902, 903, ..., 90N and a second set of modulation elements 911, 912, 913, ..., 91N.

The length of the waveguide with which each modulation element of the first set interacts is smaller than the length of the waveguide with which each modulation element of the second set interacts.

The switching arrangement 921, 922 operates in a similar manner to the previously described switching arrangement, namely to, responsive to a modulation control signal provided via the multiplexer arrangement (not visible in Fig. 9), selectively connect each modulation element to either a ground reference voltage or a respective drive voltage for the modulation element to thereby control the optical modulation performed by each modulation element.

The modulation arrangement 900 further comprises a voltage biasing arrangement 931, 932 for each set of modulation elements. Each voltage biasing arrangement 931, 932 is configured to, for each modulation element, bias a reference voltage to define the respective drive voltage for the modulation element. The reference voltage is defined at a voltage input 935.

The modulation arrangements 800, 900 previously described may be employed to function as the optical modulator for any preceding embodiment, e.g., the optical modulator for the offset modulation arrangement and/or the optical modulator for the amplitude modulation arrangement.

In addition to the above-described examples, the following examples are disclosed.

Example 1. A device for trapping one or more atoms comprising: an atom trapping arrangement configured to selectively trap a respective atom in each of a plurality of different atom trap locations; for each atom trap location in the plurality of different atom trap locations, at least one waveguide configured to guide light for application to said atom trap location; for each waveguide, a modulation arrangement configured to controllably perform optical modulation on light guided by said waveguide; one or more control signal generators configured to generate one or more control signals; and a multiplexer arrangement configured to control which, if any, of the one or more control signals are provided to each modulation arrangement, wherein each modulation arrangement performs the optical modulation of light responsive to any control signal that is provided to said modulation arrangement by the multiplexer arrangement.

Example 2. The device of example 1, wherein, for each waveguide, the modulation arrangement comprises: an offset modulation arrangement configured to controllably apply an offset modulation to the light guided by said waveguide; and an amplitude modulation arrangement configured to controllably apply a varying modulation to the light guided by said waveguide.

Example 3. The device of example 2, wherein, for each modulation arrangement: the offset modulation arrangement comprises a first optical modulator; and the amplitude modulation arrangement comprises a second optical modulator, separate to the first optical modulator.

Example 4. The device of example 3, wherein, for each modulation arrangement: the first optical modulator is configured to perform optical modulation responsive to a first voltage supplied to the first optical modulator; the offset modulation arrangement comprises a first capacitor connected to the first optical modulator, wherein the first capacitor is configured to store the first voltage and supply the first voltage to the first optical modulator; and the one or more control signal generators and the multiplexer arrangement are together configured to controllably update the first voltage stored by the first capacitor.

Example 5. The device of example 2, wherein: each modulation arrangement comprises: a third optical modulator configured to perform optical modulation responsive to a second voltage supplied to the third optical modulator; and a second capacitor configured to define the second voltage, wherein, for each modulation arrangement, the offset modulation arrangement provides a voltage at a first plate of the second capacitor and the amplitude modulation arrangement provides a varying voltage at a second plate, opposite to the first plate, of the second capacitor.

Example 6. The device of any one of examples 2 to 5, wherein, for each waveguide, the amplitude modulation arrangement is configured to apply the varying modulation to the light guided by the waveguide responsive to an amplitude control signal generated by the one or more control signal generators and supplied to the amplitude modulation arrangement via the multiplexer arrangement.

Example 7. The device of example 6, wherein the one or more control signal generators is configured to generate a plurality of candidate amplitude control signals; and the multiplexer arrangement is configured to selectively provide, to each amplitude modulation arrangement, one of the candidate amplitude control signals as the amplitude control signal for said amplitude modulation arrangement.

Example 8. The device of example 7, wherein each amplitude modulation arrangement comprises a biasing circuit configured to bias a magnitude of the amplitude control signal provided to the amplitude modulation arrangement by the multiplexer arrangement.

Example 9. The device of any one of examples 2 to 8, wherein, for each waveguide, the offset modulation arrangement is configured to apply the offset modulation to the light guided by said waveguide responsive to an offset control signal generated by the one or more control signal generators and supplied to the offset modulation arrangement via the multiplexer arrangement.

Example 10. The device of example 9, wherein:
the one or more control signal generators is configured to generate an offset control signal having a magnitude that changes for different offset modulation arrangements; and
the multiplexer arrangement is configured to provide, to each offset modulation arrangement, the generated offset control signal only when the control signal has the magnitude for said offset modulation arrangement.

Example 11. The device of any one of examples 1 to 10, wherein each modulation arrangement comprises a plurality of different, separate modulation elements, each modulation element being configured to perform the optical modulation of light responsive to a respective element control signal that is provided to said modulation element.

Example 12. The device of example 11, wherein each modulation arrangement comprises a switching arrangement configured to, responsive to a modulation control signal provided via the multiplexer arrangement, selectively connect each modulation element to either a ground reference voltage or a respective drive voltage for the modulation element to thereby control the optical modulation performed by each modulation element.

Example 13. The device of example 12, wherein each modulation arrangement comprises: a voltage input configured to receive a reference voltage; and
a voltage biasing arrangement configured to, for each modulation element, bias the reference voltage to define the respective drive voltage for the modulation element.

Example 14. The device of example 13, wherein, for each modulation arrangement, the voltage biasing arrangement is configured to define a different drive voltage for each modulation element.

Example 15. The device of any one of examples 11 to 14, wherein, for each modulation arrangement, each of two or more modulation elements of the plurality of modulation elements interacts with a different portion of the waveguide to perform the optical modulation; and the length of each portion of the waveguide, with which the two or more modulation elements interact, is different.

Example 16. A modulation arrangement comprising a plurality of different, separate modulation elements, each modulation element being configured to perform the optical modulation of light responsive to a respective element control signal that is provided to said modulation element.

Example 17. The modulation arrangement of example 16, further comprising comprises a switching arrangement configured to, responsive to a modulation control signal provided via the multiplexer arrangement, selectively connect each modulation element to either a ground reference voltage or a respective drive voltage for the modulation element to thereby control the optical modulation performed by each modulation element.

Example 18. The modulation arrangement of example 17, wherein each modulation arrangement comprises: a voltage input configured to receive a reference voltage; and a voltage biasing arrangement configured to, for each modulation element, bias the reference voltage to define the respective drive voltage for the modulation element.

Example 19. The modulation arrangement of example 18, wherein, for each modulation arrangement, the voltage biasing arrangement is configured to define a different drive voltage for each modulation element.

Example 20. The modulation arrangement of any one of examples 16 to 19, wherein, for each modulation arrangement, each of two or more modulation elements of the plurality of modulation elements interacts with a different portion of the waveguide to perform the optical modulation; and the length of each portion of the waveguide, with which the two or more modulation elements interact, is different.

In the present disclosure, ordinal numbers (e.g. "first", "second" and so on) have been used purely to distinguish different elements from one another for the sake of clarity, and reference to a non-"first" (e.g. "second" or "third") element does not necessitate that a "first" element be present. The skilled person would be capable of relabelling any such elements as appropriate (e.g. relabelling a "second" element as a "first" element if only the second element is present).

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A device (100) for trapping one or more atoms (191, 192) comprising:
an atom trapping arrangement (110) configured to selectively trap a respective atom in each of a plurality of different atom trap locations;
for each atom trap location in the plurality of different atom trap locations, at least one waveguide (121, 122, 123, 12N) configured to guide light (L1, L2) for application to said atom trap location;
for each waveguide, a modulation arrangement (300, 400, 800, 900) configured to controllably perform optical modulation on light guided by said waveguide;
one or more control signal generators (360, 501, 502, 503, 505) configured to generate one or more control signals (S_{CA}, S_{OFFSET}); and
a multiplexer arrangement (350, 550) configured to control which, if any, of the one or more control signals are provided to each modulation arrangement,
wherein each modulation arrangement performs the optical modulation of light responsive to any control signal that is provided to said modulation arrangement by the multiplexer arrangement.

2. The device of claim 1, wherein, for each waveguide, the modulation arrangement (300, 400) comprises:
an offset modulation arrangement (310) configured to controllably apply an offset modulation to the light guided by said waveguide; and
an amplitude modulation arrangement (320) configured to controllably apply a varying modulation to the light guided by said waveguide.

3. The device of claim 2, wherein, for each modulation arrangement:
the offset modulation arrangement (310) comprises a first optical modulator (311); and
the amplitude modulation arrangement (320) comprises a second optical modulator, separate to the first optical modulator.

4. The device of claim 3, wherein, for each modulation arrangement:
the first optical modulator (311) is configured to perform optical modulation responsive to a first voltage (V1) supplied to the first optical modulator;
the offset modulation arrangement comprises a first capacitor (C1) connected to the first optical modulator, wherein the first capacitor is configured to store the first voltage and supply the first voltage to the first optical modulator; and
the one or more control signal generators (360) and the multiplexer arrangement (350) are together configured to controllably update the first voltage stored by the first capacitor.

5. The device of claim 2, wherein:
each modulation arrangement comprises:
a third optical modulator (411) configured to perform optical modulation responsive to a second voltage supplied to the third optical modulator; and
a second capacitor (C2) configured to define the second voltage,
wherein, for each modulation arrangement, the offset modulation arrangement provides a voltage at a first plate of the second capacitor and the amplitude modulation arrangement provides a varying voltage at a second plate, opposite to the first plate, of the second capacitor.

6. The device of any one of claims 2 to 5, wherein, for each waveguide, the amplitude modulation arrangement is configured to apply the varying modulation to the light guided by the waveguide responsive to an amplitude control signal (S_{CA}) generated by the one or more control signal generators and supplied to the amplitude modulation arrangement via the multiplexer arrangement (350, 550).

7. The device of claim 6, wherein:
the one or more control signal generators (501, 502, 503) is configured to generate a plurality of candidate amplitude control signals; and
the multiplexer arrangement is configured to selectively provide, to each amplitude modulation arrangement, one of the candidate amplitude control signals as the amplitude control signal for said amplitude modulation arrangement.

8. The device of claim 7, wherein each amplitude modulation arrangement comprises a biasing circuit (610, 700) configured to bias a magnitude of the amplitude control signal provided to the amplitude modulation arrangement by the multiplexer arrangement.

9. The device of any one of claims 2 to 8, wherein, for each waveguide, the offset modulation arrangement is configured to apply the offset modulation to the light guided by said waveguide responsive to an offset control signal generated by the one or more control signal generators and supplied to the offset modulation arrangement via the multiplexer arrangement.

10. The device of claim 9, wherein:
the one or more control signal generators is configured to generate an offset control signal having a magnitude that changes for different offset modulation arrangements; and
the multiplexer arrangement is configured to provide, to each offset modulation arrangement, the generated offset control signal only when the control signal has the magnitude for said offset modulation arrangement.

11. The device of any one of claims 1 to 10, wherein each modulation arrangement comprises a plurality of different, separate modulation elements (801, 802, 803, 80N, 901, 902, 903, 90N, 911, 912, 913, 91N), each modulation element being configured to perform the optical modulation of light responsive to a respective element control signal that is provided to said modulation element.

12. The device of claim 11, wherein each modulation arrangement comprises a switching arrangement (820, 921, 922) configured to, responsive to a modulation control signal provided via the multiplexer arrangement, selectively connect each modulation element to either a ground reference voltage or a respective drive voltage for the modulation element to thereby control the optical modulation performed by each modulation element.

13. The device of claim 12, wherein each modulation arrangement comprises:
a voltage input (835, 935) configured to receive a reference voltage; and
a voltage biasing arrangement (830, 931, 932) configured to, for each modulation element, bias the reference voltage to define the respective drive voltage for the modulation element; and/or
wherein, for each modulation arrangement, the voltage biasing arrangement is configured to define a different drive voltage for each modulation element.

14. The device of any one of claims 11 to 13, wherein, for each modulation arrangement:
each of two or more modulation elements (901, 911) of the plurality of modulation elements interacts with a different portion of the waveguide to perform the optical modulation; and
the length of each portion of the waveguide, with which the two or more modulation elements interact, is different.

15. A modulation arrangement (800, 900) comprising a plurality of different, separate modulation elements (801, 802, 803, 80N, 901, 902, 903, 90N, 911, 912, 913, 91N), each modulation element being configured to perform the optical modulation of light responsive to a respective element control signal that is provided to said modulation element.

## Amended claims

### Amended claims in accordance with Rule 137(2) EPC.

1. A device (100) for trapping one or more atoms (191, 192) comprising:
an atom trapping arrangement (110) configured to selectively trap a respective atom in each of a plurality of different atom trap locations;
for each atom trap location in the plurality of different atom trap locations, at least one waveguide (121, 122, 123, 12N) configured to guide light (L1, L2) for application to said atom trap location;
for each waveguide, a modulation arrangement (300, 400, 800, 900) configured to controllably perform optical modulation on light guided by said waveguide;
one or more control signal generators (360, 501, 502, 503, 505) configured to generate one or more control signals (S_{CA}, S_{OFFSET}); and
a multiplexer arrangement (350, 550) configured to control which, if any, of the one or more control signals are provided to each modulation arrangement,
wherein each modulation arrangement performs the optical modulation of light responsive to any control signal that is provided to said modulation arrangement by the multiplexer arrangement.

2. The device of claim 1, wherein, for each waveguide, the modulation arrangement (300, 400) comprises:
an offset modulation arrangement (310) configured to controllably apply an offset modulation to the light guided by said waveguide; and
an amplitude modulation arrangement (320) configured to controllably apply a varying modulation to the light guided by said waveguide.

3. The device of claim 2, wherein, for each modulation arrangement:
the offset modulation arrangement (310) comprises a first optical modulator (311); and
the amplitude modulation arrangement (320) comprises a second optical modulator, separate to the first optical modulator.

4. The device of claim 3, wherein, for each modulation arrangement:
the first optical modulator (311) is configured to perform optical modulation responsive to a first voltage (V1) supplied to the first optical modulator;
the offset modulation arrangement comprises a first capacitor (C1) connected to the first optical modulator, wherein the first capacitor is configured to store the first voltage and supply the first voltage to the first optical modulator; and
the one or more control signal generators (360) and the multiplexer arrangement (350) are together configured to controllably update the first voltage stored by the first capacitor.

5. The device of claim 2, wherein:
each modulation arrangement comprises:
a third optical modulator (411) configured to perform optical modulation responsive to a second voltage supplied to the third optical modulator; and
a second capacitor (C2) configured to define the second voltage,
wherein, for each modulation arrangement, the offset modulation arrangement provides a voltage at a first plate of the second capacitor and the amplitude modulation arrangement provides a varying voltage at a second plate, opposite to the first plate, of the second capacitor.

6. The device of any one of claims 2 to 5, wherein, for each waveguide, the amplitude modulation arrangement is configured to apply the varying modulation to the light guided by the waveguide responsive to an amplitude control signal (S_{CA}) generated by the one or more control signal generators and supplied to the amplitude modulation arrangement via the multiplexer arrangement (350, 550).

7. The device of claim 6, wherein:
the one or more control signal generators (501, 502, 503) is configured to generate a plurality of candidate amplitude control signals; and
the multiplexer arrangement is configured to selectively provide, to each amplitude modulation arrangement, one of the candidate amplitude control signals as the amplitude control signal for said amplitude modulation arrangement.

8. The device of claim 7, wherein each amplitude modulation arrangement comprises a biasing circuit (610, 700) configured to bias a magnitude of the amplitude control signal provided to the amplitude modulation arrangement by the multiplexer arrangement.

9. The device of any one of claims 2 to 8, wherein, for each waveguide, the offset modulation arrangement is configured to apply the offset modulation to the light guided by said waveguide responsive to an offset control signal generated by the one or more control signal generators and supplied to the offset modulation arrangement via the multiplexer arrangement.

10. The device of claim 9, wherein:
the one or more control signal generators is configured to generate an offset control signal having a magnitude that changes for different offset modulation arrangements; and
the multiplexer arrangement is configured to provide, to each offset modulation arrangement, the generated offset control signal only when the control signal has the magnitude for said offset modulation arrangement.

11. The device of any one of claims 1 to 10, wherein each modulation arrangement comprises a plurality of different, separate modulation elements (801, 802, 803, 80N, 901, 902, 903, 90N, 911, 912, 913, 91N), each modulation element being configured to perform the optical modulation of light responsive to a respective element control signal that is provided to said modulation element.

12. The device of claim 11, wherein each modulation arrangement comprises a switching arrangement (820, 921, 922) configured to, responsive to a modulation control signal provided via the multiplexer arrangement, selectively connect each modulation element to either a ground reference voltage or a respective drive voltage for the modulation element to thereby control the optical modulation performed by each modulation element.

13. The device of claim 12, wherein each modulation arrangement comprises:
a voltage input (835, 935) configured to receive a reference voltage; and
a voltage biasing arrangement (830, 931, 932) configured to, for each modulation element, bias the reference voltage to define the respective drive voltage for the modulation element; and/or
wherein, for each modulation arrangement, the voltage biasing arrangement is configured to define a different drive voltage for each modulation element.

14. The device of any one of claims 11 to 13, wherein, for each modulation arrangement:
each of two or more modulation elements (901, 911) of the plurality of modulation elements interacts with a different portion of the waveguide to perform the optical modulation; and
the length of each portion of the waveguide, with which the two or more modulation elements interact, is different.
